# EUROPÄISCHE PATENTSCHRIFT

(11) **EP 1 719 367 B1**
(45) Veröffentlichungstag und Bekanntmachung des Hinweises auf die Patenterteilung: **12.12.2007**
(21) Anmeldenummer: 05707922.0
(22) Anmeldetag: 02.02.2005
(51) Int. Cl.: H04Q 7/30, H04L 29/06

(54) **MEHRFACHE VERWENDUNG EINER STANDARDISIERTEN SCHNITTSTELLE IN EINER VORRICHTUNG**
MULTIPLE USE OF A STANDARD INTERFACE IN A DEVICE
UTILISATION MULTIPLE D'UNE INTERFACE STANDARDISEE DANS UN DISPOSITIF

(30) Priorität: 23.02.2004 EP 04004018
(43) Veröffentlichungstag der Anmeldung: 08.11.2006
(73) Patentinhaber: NOKIA SIEMENS NETWORKS GMBH & CO. KG, 81541 München (DE)
(72) Erfinder: KROENER, Hans, 73312 Geislingen-Weiler (DE); MERZ, Peter, 81373 München (DE); SPLETT, Armin, 89081 Ulm (DE)
(86) Internationale Anmeldenummer: PCT/EP2005/050451
(87) Internationale Veröffentlichungsnummer: WO 2005/081563

(56) Entgegenhaltungen:
- EP-A- 0 652 644
- EP-A- 0 869 629
- EP-A- 1 246 484
- WO-A-03/023994
- CPRI: "Common Public Radio Interface Specification (CPRI)" 30. September 2003 (2003-09-30), CPRI , CPRI , XP002291841 section 1 section 2 section 4Abbildungen 1-30
- OBSAI: "The Development and Benefits of an Open Base Station Architecture" 13. März 2003 (2003-03-13), OBSAI , OBSAI , XP002291842 das ganze Dokument

## Beschreibung

Die Erfindung betrifft eine Vorrichtung mit einer ersten Schnittstelle zur Datenübertragung zwischen einer ersten Einheit und einer funktionell in Bezug auf die erste Einheit gleichen zweiten Einheit und mit einer zweiten Schnittstelle zur Datenübertragung zwischen der ersten Einheit und einer funktionell in Bezug auf die erste Einheit unterschiedlichen dritten Einheit. Weiterhin betrifft die Erfindung ein Verfahren zum Betreiben einer solchen Vorrichtung.

Schnittstellen dienen der Verbindung zwischen zwei oder mehreren Einheiten einer oder mehrerer Vorrichtungen, wobei über eine Schnittstelle Daten zwischen den verbundenen Einheiten übertragen werden können. Eine Schnittstelle kann in Bezug auf die physikalische Schicht z.B. realisiert werden durch ein Kabel bzw. eine Leitung, über welches unter Verwendung von elektrischen oder optischen Übertragungsverfahren Daten übertragen werden. Eine Schnittstelle ist u.a. durch die zur Kommunikation zwischen den verbundenen Einheiten verwendeten Übertragungsverfahren und Übertragungsprotokolle definiert. Unter einem Übertragungsprotokoll wird ein festgelegtes Verfahren für den Austausch von Daten zwischen zwei über eine Schnittstelle verbundene Einheiten verstanden, ein Übertragungsprotokoll enthält Konventionen mit definierten Datenformaten und Steuerprozeduren für die Kommunikation. Ein Beispiel für eine Gruppe von Übertragungsprotokollen stellen Übertragungsprotokolle nach dem OSI (Open Systems Interconnection) Schichtenmodell dar.

In der Regel ist der Aufbau bzw. die Definition einer Schnittstelle, welche z.B. gemäß einem Standard spezifiziert sein kann, abhängig von der Natur der Einheiten, welche durch die Schnittstelle verbunden werden, so dass es im allgemeinen nicht möglich ist, beliebige Einheiten über eine definierte Schnittstelle zu verbinden.

Auch in Basisstationen von Funkkommunikationssystemen existieren verschiedene Einheiten, welche durch geeignete Schnittstellen miteinander verbunden sind. Basisstationen umfassen in der Regel mehrere Einheiten zur Basisbandverarbeitung, wobei in den Einrichtungen zur Basisbandverarbeitung Daten für bzw. von Teilnehmerstationen verarbeitet werden. Weiterhin existieren Sende- und Empfangseinheiten, welche von der Basisbandverarbeitung gelieferte Basisbanddaten auf Trägerfrequenzen-auf modulieren und an Teilnehmerstationen senden. Die Verbindung zwischen einer Einheit zur Basisbandverarbeitung und einer Sende- und Empfangseinheit kann z.B. erfolgen über eine Schnittstelle gemäß dem CPRI Standard (aktuell: CPRI Specification V1.0 (2003-09-30), Common Public Radio Interface (CPRI) ; Interface Specification, erhältlich über http://www.cpri.info/).

Das Dokument EP 1 246 484 A2 beschreibt eine Basisstation eines UMTS-Funkkommunikationssystems. Die analogen Signale werden in Hochfrequenz-Blöcken verarbeitet, und die digitalen Signale werden in Basisband-Blöcken verarbeitet. Mehrere HF-Blöcke sind zu einem HF-Bord und mehrere Basisband-Blöcke zu einem Basisband-Bord zusammengefasst. Es existiert jeweils eine Verbindungsleitung zwischen einem HF-Block und einem Basisband-Block. Die einzelnen Rechenblöcke der Basisband-Blöcke stehen über eine Hochgeschwindigkeitsschnittstelle miteinander in Verbindung.

Insbesondere für den Funkstandard UMTS (Universal Mobile Telecommunications System) kann es nötig sein, in Senderichtung Daten einer Vielzahl von Teilnehmerstationen, welche möglicherweise von verschiedenen Einrichtungen zur Basisbandverarbeitung verarbeitet werden, zu addieren, bevor sie an die jeweilige Sendeeinheit übertragen werden, bzw. in Empfangsrichtung die von einer Sende- und Empfangseinheiten empfangenen Daten auf mehrere Einrichtungen zur Basisbandverarbeitung zu verteilen. Um dies zu realisieren, wird in Basisstationen üblicherweise eine Einheit, welche Teilschritte der Basisbandverarbeitung durchführt, mit einer Mehrzahl an funktionell in Bezug auf die erstgenannte Einheit unterschiedlichen Einheiten, welche andere Teilschritte der Basisbandverarbeitung durchführen, sternförmig verbunden.

Der Erfindung liegt die Aufgabe zugrunde, eine effiziente Realisierung einer Vorrichtung, wie z.B. von Bestandteilen einer Basisstation eines Funkkommunikationssystems, aufzuzeigen, bei welcher eine erste Einheit über Schnittstellen mit einer zweiten und einer dritten Einheit verbunden ist.

Diese Aufgabe wird durch eine Vorrichtung mit den Merkmalen des Anspruchs 1 und durch ein Verfahren mit den Merkmalen eines nebengeordneten Anspruchs gelöst.

Vorteilhafte Ausgestaltungen und Weiterbildungen sind Gegenstand von Unteransprüchen.

Die erfindungsgemäße Vorrichtung umfasst zumindest eine erste Einheit. Sie weist eine erste Schnittstelle zur Datenübertragung zwischen der ersten Einheit und einer funktionell in Bezug auf die erste Einheit gleichen zweiten Einheit auf, sowie eine zweite Schnittstelle zur Datenübertragung zwischen der ersten Einheit und einer funktionell in Bezug auf die erste Einheit unterschiedlichen dritten Einheit. Die erste und die zweite Schnittstelle sind hierbei so ausgestaltet, dass jeweils eine Mehrzahl an verschiedenen Datentypen übertragbar sind, und dass die beiden Schnittstellen nach dem gleichen Standard spezifiziert sind.

Die zweite und/oder die dritte Einheit können Bestandteil der erfindungsgemäßen Vorrichtung oder auch einer oder mehrerer anderer Vorrichtungen sein. Die funktionelle Gleichheit zwischen der ersten Einheit und der zweiten Einheit bedeutet nicht, dass diese zwangsläufig gleich aufgebaut sein müssen, sondern vielmehr, dass sie zur Lösung von einander entsprechenden beziehungsweise ähnelnden Aufgaben eingesetzt werden können. Neben der Verbindung der ersten Einheit zu der zweiten und der dritten Einheit können weitere Verbindungen der ersten Einheit zu weiteren funktionell in Bezug auf die erste Einheit gleichen und auch unterschiedlichen Einheiten vorhanden sein.

Unter einer Schnittstelle wird eine materielle Verbindung, wie z.B. ein Kabel oder eine Leitung, zwischen der ersten Einheit und der zweiten beziehungsweise der dritten Einheit verstanden. Über die in der Erfindung verwendeten Schnittstellen können jeweils mehrere Datentypen übertragen werden, wobei verschiedene Datentypen sich zum Beispiel hinsichtlich ihres Inhaltes und/oder ihrer Herkunft und/oder hinsichtlich ihrer Anforderung bei der Übertragung über die Schnittstelle, wie zum Beispiel die erforderliche Datenrate oder Zeitanforderungen der Übertragung, unterscheiden können. Es ist sowohl möglich, dass die Datentypen, welche über die erste Schnittstelle übertragen werden können, sich von den Datentypen, welche über die zweite Schnittstelle übertragen werden können, unterscheiden, als auch, dass diese Datentypen gleich sind. Beide in der Erfindung verwendeten Schnittstellen sind nach einem Standard spezifiziert, wobei ein Standard in Bezug auf eine Schnittstelle zum Beispiel Übertragungsverfahren der physikalischen Schicht, und/oder Übertragungsprotokolle von höheren Schichten festlegt oder zumindest zur Auswahl stellt.

In Weiterbildung der Erfindung sieht der Standard die Übertragung der verschiedenen Datentypen unter Verwendung eines Zeitmultiplexverfahrens vor. Zusätzlich oder alternativ ist es möglich, dass der Standard ein optisches und/oder ein elektronisches Übertragungsverfahren vorsieht.

Einer vorteilhaften Ausgestaltung der Erfindung gemäß sieht der Standard als Übertragungsprotokoll ein Ethernet-Protokoll und/oder ein HDLC (High Data Link Control) -Protokoll vor. Es ist möglich; dass neben diesen beiden Protokollen auch weitere Protokolle vorgesehen sind bzw. zur Auswahl stehen. Der Standard kann den Einsatz des Ethernet- und/oder des HDLC-Protokolls auf einer oder mehreren Protokollschichten vorsehen.

Es ist vorteilhaft, wenn es sich bei der ersten Einheit und bei der zweiten Einheit jeweils um eine Einrichtung zur Basisbandverarbeitung von Funksignalen handelt. Die Basisbandverarbeitung kann in Senderichtung zum Beispiel die Kodierung, Spreizung, Verwürfelung und Blockbildung umfassen. In Empfangsrichtung kann im Rahmen der Basisbandverarbeitung zum Beispiel eine Kanalschätzung und die jeweilige Umkehroperationen der Senderichtung durchgeführt werden.

Einer Ausgestaltung der Erfindung gemäß weist die erste Einheit Mittel zum Verarbeiten von über die erste Schnittstelle empfangenen Daten der zweiten Einheit auf. Somit kann die erste Einheit zum Beispiel eigene Daten mit Daten der zweiten Einheit kombinieren, bevor diese über die zweite Schnittstelle an die dritte Einheit übertragen werden.

In Weiterbildung der Erfindung handelt es sich bei der dritten Einheit um eine Sende- und/oder Empfangseinrichtung zum Senden und/oder zum Empfangen von Funksignalen. Vorzugsweise empfängt die dritte Einheit derartige Funksignale beziehungsweise Inhalte dieser Funksignale von der ersten Einheit, welche in Form einer Einrichtung zur Basisbandverarbeitung von Funksignalen realisiert sein kann. Entsprechend ist es möglich, dass die dritte Einheit derartige Funksignale an die erste Einheit, welche in Form einer Einrichtung zur Basisbandverarbeitung von Funksignalen realisiert sein kann, überträgt. Die dritte Einheit kann Antennen zum Empfangen und/oder Ausstrahlen der Funksignale aufweisen.

Es ist vorteilhaft, wenn es sich bei der erfindungsgemäßen Vorrichtung um zumindest einen Bestandteil einer Basisstation eines Funkkommunikationssystems handelt.

In Weiterbildung der Erfindung handelt es sich bei der ersten und der zweiten Schnittstelle um eine nach dem CPRI-Standard spezifizierte Schnittstelle. Unter dem CPRI-Standard wird sowohl die aktuell gültige Version, als auch zukünftige Versionen verstanden.

Bei dem Verfahren zum Betreiben einer zumindest eine erste Einheit umfassenden Vorrichtung werden zwischen der ersten Einheit und einer funktionell in Bezug auf die erste Einheit gleichen zweiten Einheit Daten über eine erste Schnittstelle übertragen, zwischen der ersten Einheit und einer funktionell in Bezug auf die erste Einheit unterschiedlichen dritten Einheit werden Daten über eine zweite Schnittstelle übertragen. Über die erste und die zweite Schnittstelle werden jeweils eine Mehrzahl an verschiedenen Datentypen übertragen, und die erste und die zweite Schnittstelle sind nach dem gleichen Standard spezifiziert.

In Bezug auf das erfindungsgemäße Verfahren sind obige Ausgestaltungen und Weiterbildungen, betreffend den Standard und/oder die erste Einheit und/oder die zweite Einheit und/oder die dritte Einheit entsprechend anwendbar.

Im folgenden wird die Erfindung anhand eines Ausführungsbeispiels näher erläutert. Dabei zeigen:
- Figur 1:: einen Ausschnitt aus einer erfindungsgemäßen Basisstation,
- Figur 2:: einen Ausschnitt aus einer Basisstation gemäß dem Stand der Technik.

Die Erfindung wird im folgenden unter Bezugnahme auf eine Basisstation eines UMTS-Funkkommunikationssystems erläutert, in welcher eine CPRI (Common Public Radio Interface) Schnittstelle zum Einsatz kommt. Die Erfindung ist jedoch weder auf Basisstationen noch auf die Verwendung von CPRI Schnittstellen beschränkt, so kann gemäß der Erfindung anstelle einer CPRI Schnittstelle auch eine andere standardisierte Schnittstelle, über welche eine Mehrzahl an verschiedenen Datentypen übertragbar sind, in einer Basisstation oder einer anderen Vorrichtung eingesetzt werden.

Die CPRI Schnittstelle verwendet ein elektrisches und/oder optisches Übertragungsverfahren auf der physikalischen Schicht. Über die CPRI Schnittstelle werden verschiedene Datentypen unter Verwendung eines Zeitmultiplexverfahrens übertragen. Als Übertragungsprotokolle der zweiten Schicht können bei der CPRI Schnittstelle u.a. ein Teil des Ethernet-Protokolls und/oder ein HDLC (High Data Link Control) Protokoll und/oder betreiberspezifische Übertragungsprotokolle, welche sich von Schnittstelle zu Schnittstelle z.B. in Abhängigkeit von den durch die jeweilige Schnittstelle verbundenen Einrichtungen unterscheiden können, eingesetzt werden. Die CPRI Schnittstelle wird beschrieben in der derzeit gültigen Standardversion CPRI Specification V1.0, auf deren Inhalt hier verwiesen wird, und welcher zur Offenbarung der Anmeldung gehört.

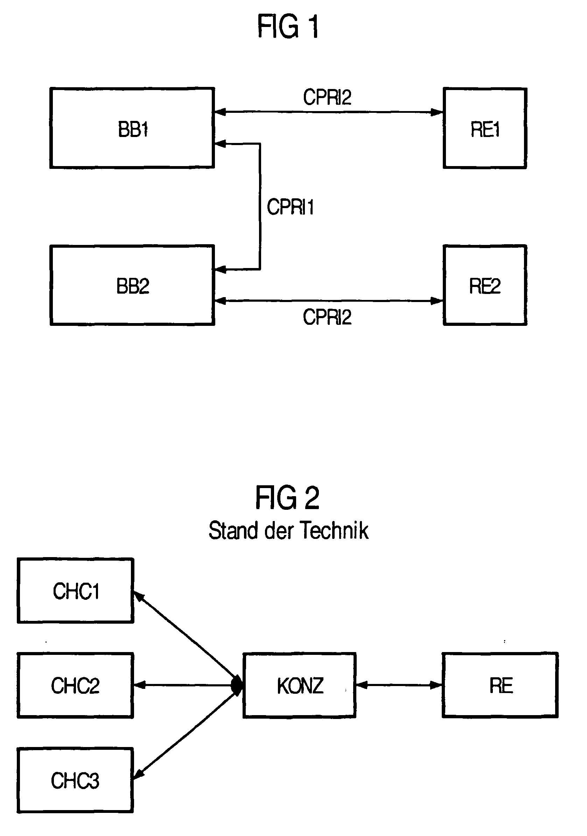

Bei Basisstationen von Funkkommunikationssystemen werden funktional unterschiedliche Bauteile in Blöcke aufgeteilt. Dieser modulare Aufbau ermöglicht die unabhängige Skalierbarkeit der funktional unterschiedlichen Bauteile, so dass in der Regel eine unterschiedliche Anzahl an Blöcken von Bauteilen verschiedener Funktion vorhanden ist. Figur 2 zeigt schematisch eine solche Aufteilung einer Basisstation gemäß dem Stand der Technik. Die Basisbandverarbeitung von Teilnehmerstationsdaten findet in zwei Typen von Baugruppen statt. Es existiert eine Baugruppe KONZ, welche mit den beispielsweise drei Baugruppen CHC1, CHC2 und CHC3 (CHC: Channel Card) sternförmig verbunden ist. In Senderichtung findet in den Baugruppen CHC1, CHC2 und CHC3 die Kanalkodierung statt und in der Baugruppe KONZ die Spreizung und Verwürfelung, sowie die Addition von Basisband-Teilnehmerstationsdaten verschiedener Teilnehmer. In Empfangsrichtung findet in den Baugruppen CHC1, CHC2 und CHC3 die Kanalschätzung, Demodulation und Dekodierung statt.

Die Baugruppe KONZ ist mit einer Sende- und Empfangseinheiten RE verbunden, an welche sie zu versendende Teilnehmerstationsdaten der Baugruppen CHC1, CHC2 und CHC3 überträgt, bzw. von welcher sie von Teilnehmerstationen gesendete Teilnehmerstationsdaten empfängt. Werden in einem UMTS Funkkommunikationssystem Teilnehmerstationsdaten mehrerer Teilnehmerstationen auf einer Funkfrequenz bzw. auf einem Funkfrequenzband über eine Sende- und Empfangseinheiten RE ausgestrahlt, welche von verschiedenen der Baugruppen CHC1, CHC2 und CHC3 verarbeitet wurden, so findet in der Baugruppe KONZ eine Addition dieser von den verschiedenen der Baugruppen CHC1, CHC2 und CHC3 empfangenen Teilnehmerstationsdaten statt. Auf gleiche Weise verteilt die Baugruppe KONZ die von der Sende- und Empfangseinheiten RE empfangenen Teilnehmerstationsdaten an alle Baugruppen CHC1, CHC2 und CHC3, welche die Basisbandverarbeitung von Teilnehmerstationsdaten der jeweiligen Frequenz durchführen. Eine Verbindung zischen den funktionell gleichartigen Baugruppen CHC1, CHC2 und CHC3 existiert nicht.

In Figur 1 sind zwei Basisbandverarbeitungseinrichtungen BB1 und BB2 einer erfindungsgemäßen Basisstation dargestellt. Bei den beiden Basisbandverarbeitungseinrichtungen BB1 und BB2 handelt es sich vorzugsweise jeweils um ein Bauteil, welches eine Kombination der beiden in Figur 2 dargestellten Bauteile CHC und KONZ darstellt. In einer derartigen Basisbandverarbeitungseinrichtung BB1 bzw. BB2 findet somit die gesamte Basisbandverarbeitung statt, welche gemäß dem in Figur 2 dargestellten Stand der Technik auf zwei Bauteile aufgeteilt ist. Jede Basisbandverarbeitungseinrichtung BB1 und BB2 einer Basisstation ist im diesem Fall mit einer gemeinsamen Steuereinheit verbunden, welche über die in UMTS mit I_{Ub} bezeichnete Schnittstelle mit einem RNC (Radio Network Controller) verbunden ist. Bei den Basisbandverarbeitungseinrichtungen BB1 und BB2 kann es sich jedoch auch um gemäß der CPRI Spezifikation als REC (Radio Equipment Controller) bezeichnete Einheiten handeln, welche jeweils über die Iu_{b} Schnittstelle mit dem RNC verbunden sind. Im ersteren der beiden beschriebenen Fälle besteht eine Einheit REC aus mehreren Basisbandverarbeitungseinrichtung BB1 und BB2.

Die Teilnehmerstationsdaten werden von den Sende- und Empfangseinheiten RE1 und RE2 an die Teilnehmerstationen ausgestrahlt bzw. von diesen empfangen. In UMTS sind die Sende-und Empfangseinheiten RE1 und RE2 über die mit Uu bezeichnete Schnittstelle über Funk mit Teilnehmerstationen verbunden. Jede Sende- und Empfangseinheit RE1 bzw. RE2 ist für die Ausstrahlung von Funksignalen auf einer Funkfrequenz bzw. in einem Frequenzband und/oder in einen Sektor zuständig. Die beiden Basisbandverarbeitungseinrichtungen BB1 und BB2 sind über eine Schnittstelle CPRI2 des Typs CPRI mit den Sende- und Empfangseinheiten RE1 und RE2 verbunden. Anders als in Figur 1 dargestellt, ist es zusätzlich oder alternativ auch möglich, dass die Basisbandverarbeitungseinrichtung BB1 mit der Sende- und Empfangseinheiten RE2 und die Basisbandverarbeitungseinrichtung BB2 mit der Sende- und Empfangseinheiten RE1 über eine ebensolche Schnittstelle CPRI2 des Typs CPRI verbunden ist.

Über die Schnittstellen CPRI2 werden in Abwärtsrichtung, d.h. von den Basisbandverarbeitungseinrichtungen BB1 bzw. BB2 an die Sende- und Empfangseinheiten RE1 bzw. RE2, verschiedene Datentypen übertragen:
- Teilnehmerstationsdaten in Form von IQ-Daten, d.h. digitale, der Basisbandverarbeitung unterzogene und an Teilnehmerstationen auszustrahlende Nutz- und/oder Signalisierungsdaten,
- Kontrolldaten zur Steuerung der Sende- und Empfangseinheiten RE1 und RE2,
- Synchronisierungsdaten zur Synchronisierung der Sende- und Empfangseinheiten RE1 und RE2.
In Empfangsrichtung werden über die Schnittstellen CPRI2 von den Sende- und Empfangseinheiten RE1 und RE2 empfangene Teilnehmerstationsdaten an die Basisbandverarbeitungseinrichtungen BB1 und BB2 zur weiteren Verarbeitung übertragen.

Erfindungsgemäß wird eine Schnittstelle CPRI1 des Typs CPRI auch zur Verbindung der beiden funktionell gleichen Basisbandverarbeitungseinrichtungen BB1 und BB2 eingesetzt. Hierdurch können einander entsprechende Untereinheiten der Basisbandverarbeitungseinrichtungen BB1 und BB2 direkt miteinander kommunizieren. Folgende Datentypen können übertragen werden:
- Teilnehmerstationsdaten in Form von IQ-Daten, welche an Teilnehmerstationen auszustrahlen oder von diesen empfangen wurden,
- vom RNC und/oder OMC (Operation and Maintenance Center) empfangene Daten, z.B. in Form von Teilnehmerstationsdaten, sowie in Form von Steuerdaten betreffend den Betrieb und/oder die Wartung der Basisbandverarbeitungseinrichtungen BB1 bzw. BB2,
- nicht vom RNC bzw. OMC stammende Steuer- und Wartungsdaten, welche z.B. der Konfiguration der Schnittstelle CPRI1 zwischen den Basisbandverarbeitungseinrichtungen BB1 und BB2 dienen, wie z.B. der Information, welche Teilnehmerstationsdaten zwischen den Basisbandverarbeitungseinrichtungen BB1 und BB2 ausgetauscht werden,
- Synchronisationsdaten zur Synchronisation zwischen den Basisbandverarbeitungseinrichtungen BB1 und BB2.

Somit wird die identisch definierte CPRI Schnittstelle in der Basisstation für zwei verschiedenartige Verbindungen eingesetzt, einerseits für die Verbindung zwischen den funktionell unterschiedlichen Basisbandverarbeitungseinrichtungen BB1 bzw. BB2 und den Sende- und Empfangseinheiten RE1 bzw. RE2, und andererseits für die Verbindung zwischen den funktionell gleichen Basisbandverarbeitungseinrichtungen BB1 und BB2. Somit stehen für die Kommunikation zwischen den Basisbandverarbeitungseinrichtungen BB1 bzw. BB2 und den Sende- und Empfangseinheiten RE1 bzw. RE2 einerseits und zwischen den Basisbandverarbeitungseinrichtungen BB1 und BB2 andererseits die gleichen Übertragungsverfahren auf der physikalischen Schicht und die gleichen Übertragungsprotokolle der zweiten Schicht zur Verfügung. So können die Teilnehmerstationsdaten zwischen den Basisbandverarbeitungseinrichtungen BB1 und BB2 unter Verwendung der gleichen Übertragungsprotokolle übertragen werden wie die Teilnehmerstationsdaten zwischen den Basisbandverarbeitungseinrichtungen BB1 bzw. BB2 und den Sende-und Empfangseinheiten RE1 bzw. RE2. Die vom RNC empfangenen zwischen den Basisbandverarbeitungseinrichtungen BB1 und BB2 ausgetauschten Daten können je nach Inhalt unter Verwendung der gleichen Übertragungsprotokolle übertragen werden wie die Teilnehmerstationsdaten oder die Kontrolldaten zwischen den Basisbandverarbeitungseinrichtungen BB1 bzw. BB2 und den Sende- und Empfangseinheiten RE1 bzw. RE2. Die nicht vom RNC stammenden Steuer- und Wartungsdaten können zwischen den Basisbandverarbeitungseinrichtungen BB1 und BB2 unter Verwendung des gleichen Übertragungsprotokolls übertragen werden wie die Kontrolldaten zwischen den Basisbandverarbeitungseinrichtungen BB1 bzw. BB2 und den Sende- und Empfangseinheiten RE1 bzw. RE2. Schließlich können für die Synchronisationsdaten zur Synchronisation zwischen den Basisbandverarbeitungseinrichtungen BB1 und BB2 die gleichen Übertragungsprotokolle eingesetzt werden wie für die Versendung der Synchronisierungsdaten zur Synchronisierung der Sende- und Empfangseinheiten RE1 und RE2 von den Basisbandverarbeitungseinrichtungen BB1 und BB2 an die Sende-und Empfangseinheiten RE1 und RE2.

Auch bei Vorliegen mehrerer Basisbandverarbeitungseinrichtungen werden jeweils zwei Basisbandverarbeitungseinrichtungen über eine CPRI Schnittstelle miteinander verbunden, wobei alle Basisbandverarbeitungseinrichtungen bis auf zwei jeweils mit zwei weiteren Basisbandverarbeitungseinrichtungen verbunden werden, so dass eine durchgehende Verbindung, bestehend aus mehreren paarweisen Verbindungen, zwischen allen Basisbandverarbeitungseinrichtungen existiert. Somit ist eine beliebige Skalierung der Hardware der Basisstation möglich. So kann bei Bedarf eine zusätzliche Basisbandverarbeitungseinrichtungen hinzugefügt werden, welche über eine CPRI Schnittstelle z.B. mit der zuletzt hinzugefügten Basisbandverarbeitungseinrichtungen, welche nur eine Verbindung zu einer anderen Basisbandverarbeitungseinrichtung aufweist, verbunden wird. Eine derartige Skalierbarkeit ist in der Regel bei sternförmigen Verbindungsstrukturen, wie z.B. in Figur 2 dargestellt, nicht möglich, so dass gemäß dem Stand der Technik oft eine maximale Anzahl an hinzufügbaren Basisbandverarbeitungseinrichtungen existiert.

Besteht eine Basisbandverarbeitungseinrichtungen BB1 bzw. BB2 der Figur 1 aus jeweils einer Baugruppe CHC und KONZ der Figur 2, so ermöglicht die Verbindung der Basisbandverarbeitungseinrichtungen BB1 und BB2 gemäß Figur 2 eine Verringerung der Anzahl an benötigten Baugruppen pro Basisstation durch das Wegfallen der eigenständigen Baugruppe KONZ. Da die Wartungskosten für Basisstationen in der Regel mit der Anzahl an verwendeten Baugruppen ansteigt, führt die Verwendung einer Schnittstelle zwischen den funktionell gleichartigen Basisbandverarbeitungseinrichtungen zu einer Kostenreduktion beim Betrieb von Basisstationen.

Die Verwendung der Schnittstelle CPRI1 zwischen den Basisbandverarbeitungseinrichtungen BB1 und BB2 ermöglicht die Addition der Teilnehmerstationsdaten eines Frequenzbandes vor der Versendung, indem entweder die Teilnehmerstationsdaten der Basisbandverarbeitungseinrichtung BB1 über die Schnittstelle CPRI1 an die Basisbandverarbeitungseinrichtung BB2 oder umgekehrt übertragen werden. Die Basisbandverarbeitungseinrichtung BB1 oder BB2, welche die Addition durchgeführt hat, übermittelt die addierten Teilnehmerstationsdaten dann über die Schnittstelle CPRI2 zur für die jeweilige Frequenz zuständigen Sende- und Empfangseinheiten RE1 bzw. RE2.

In Bezug auf die Empfangsrichtung ist die Verbindung der beiden Basisbandverarbeitungseinrichtungen BB1 und BB2 über die Schnittstelle CPRI1 insbesondere dann vorteilhaft, wenn die beiden Sende- und Empfangseinheiten RE1 und RE2 jeweils unterschiedliche Sektoren mit der gleichen Funkfrequenz bedienen. Empfangen beide Sende- und Empfangseinheiten RE1 und RE2 Teilnehmerstationsdaten einer Teilnehmerstation, übermitteln sie diese an die jeweilige mit ihr über die Schnittstelle CPRI2 verbundene Basisbandverarbeitungseinrichtungen BB1 bzw. BB2. Über die Schnittstelle CPRI1 zwischen den Basisbandverarbeitungseinrichtungen BB1 und BB2 werden die Teilnehmerstationsdaten an die jeweils andere Basisbandverarbeitungseinrichtung BB1 bzw. BB2 weitergegeben. Hierdurch können die über verschiedene Sektoren empfangenen Teilnehmerstationsdaten kombiniert werden, um somit die Qualität der empfangenen Teilnehmerstationsdaten zu erhöhen.

Vorteilhaft ist die Verwendung der Schnittstelle CPRI1 zur Verbindung der Basisbandverarbeitungseinrichtungen BB1 und BB2 auch dann, wenn die beiden Basisbandverarbeitungseinrichtungen BB1 und BB2 verschiedenen Netzbetreibern gehören. Besitzt z.B. ein erster Netzbetreiber eine Lizenz für ein erstes Frequenzband und ein zweiter Netzbetreiber eine Lizenz für ein zweites Frequenzband, so können sich die beiden Netzbetreiber die Sende- und Empfangseinheiten RE1 und RE2 teilen (Site Sharing bzw. Antenna Sharing), wobei die erste Sende-und Empfangseinheit RE1 für beide Frequenzen und einen ersten Sektor, eingesetzt wird, während die zweite Sende- und Empfangseinheit RE2 für beide Frequenzen und einen zweiten Sektor eingesetzt wird. Die restlichen netzseitigen Einrichtungen gehören jeweils nur zu einem der Netzbetreiber, wobei jeder der beiden Netzbetreiber Basisbandverarbeitungseinrichtungen nur für die von ihm lizenzierte Frequenz besitzt. Die Basisbandverarbeitungseinrichtung-B1 des ersten Betreibers ist mit der ersten Sende- und Empfangseinheit RE1 und die Basisbandverarbeitungseinrichtung B2 des zweiten Betreibers ist mit der zweiten Sende- und Empfangseinheit RE2 verbunden. Die Teilnehmerstationsdaten für verschiedene Teilnehmerstationen, welche auf der ersten bzw. der zweiten Frequenz gesendet werden sollen, werden vor der Versendung unter Verwendung der Schnittstelle CPRI1 der jeweils anderen Basisbandverarbeitungseinrichtung übermittelt, so dass Teilnehmerstationsdaten einer Frequenz gleichzeitig oder nacheinander in verschiedenen Sektoren ausgestrahlt werden können. Entsprechendes gilt für die Verarbeitung der Teilnehmerstationsdaten einer Frequenz, welche in verschiedenen Sektoren empfangen werden.

Die beschriebene mehrmalige Verwendung der gleichen standardisierten Schnittstelle zur Verbindung von einerseits funktionell gleichen und andererseits funktionell unterschiedlichen Baugruppen ermöglicht eine kostengünstige Realisation einer Vorrichtung, da die Schnittstelle mit einer größeren Stückzahl produziert werden kann, wodurch die Herstellungskosten sinken. Weiterhin kann die gleiche Software für die funktionell gleichen und die funktionell unterschiedlichen Baugruppen eingesetzt werden, so dass sich die Entwicklungskosten für die Software reduzieren.

Die beschriebene Vorgehensweise kann analog auch für den Fall von mehr als zwei Basisbandverarbeitungseinrichtungen BB1 und BB2 angewandt werden. In diesem Fall ist jede Basisbandverarbeitungseinrichtung jeweils mit einer oder zwei anderen Basisbandverarbeitungseinrichtungen und einer oder mehreren Sende- und Empfangseinheiten verbunden. Es ist jedoch auch möglich, die Basisbandverarbeitungseinrichtungen miteinander zu vermaschen, so dass z.B. bei Vorhandensein von drei Basisbandverarbeitungseinrichtungen jede Basisbandverarbeitungseinrichtung mit beiden anderen Basisbandverarbeitungseinrichtungen verbunden ist. Ganz allgemein kann jede Basisbandverarbeitungseinrichtung mit einer beliebigen Anzahl an anderen Basisbandverarbeitungseinrichtungen verbunden sein.

## Patentansprüche

1. Vorrichtung, welche zumindest eine erste Einheit (BB1, BB2) umfasst,
• mit einer ersten Schnittstelle (CPRI1) zur Datenübertragung zwischen der ersten Einheit (BB1, BB2) und einer funktionell in Bezug auf die erste Einheit (BB1, BB2) gleichen zweiten Einheit (BB1, BB2),
• mit einer zweiten Schnittstelle (CPRI2) zur Datenübertragung zwischen der ersten Einheit (BB1, BB2) und einer funktionell in Bezug auf die erste Einheit (BB1, BB2) unterschiedlichen dritten Einheit (RE1, RE2),
**dadurch gekennzeichnet,**
• **dass** die erste und die zweite Schnittstelle (CPRI1, CPRI2) so ausgestaltet sind,
- **dass** jeweils eine Mehrzahl an verschiedenen Datentypen übertragbar sind, und
- **dass** sie nach dem gleichen Standard spezifiziert sind,
• **dass** es sich bei der ersten Einheit (BB1, BB2) und der zweiten Einheit (BB1, BB2) jeweils um eine Einrichtung zur Basisbandverarbeitung von Funksignalen handelt, und
• **dass** es sich bei der Vorrichtung um zumindest einen Bestandteil einer Basisstation eines Funkkommunikationssystems handelt.

2. Vorrichtung nach Anspruch 1, bei der
der Standard die Übertragung der verschiedenen Datentypen unter Verwendung eines Zeitmultiplexverfahrens vorsieht.

3. Vorrichtung nach Anspruch 1 oder 2, bei der
der Standard ein optisches und/oder ein elektronisches Übertragungsverfahren vorsieht.

4. Vorrichtung nach einem der Ansprüche 1 bis 3, bei der
der Standard als Übertragungsprotokoll ein Ethernet-Protokoll und/oder ein HDLC-Protokoll vorsieht.

5. Vorrichtung nach einem der Ansprüche 1 bis 4, bei der
die erste Einheit (BB1, BB2) Mittel zum Verarbeiten von über die erste Schnittstelle (CPRI1) empfangenen Daten der zweiten Einheit (BB1, BB2) aufweist.

6. Vorrichtung nach einem der Ansprüche 1 bis 5, wobei
es sich bei der dritten Einheit (RE1, RE2) um eine Sende- und/oder Empfangseinrichtung zum Senden und/oder zum Empfangen von Funksignalen handelt.

7. Vorrichtung nach einem der Ansprüche 1 bis 6, bei der
es sich bei der ersten und der zweiten Schnittstelle (CPRI1, CPRI2) um eine nach dem CPRI Standard spezifizierte Schnittstelle handelt.

8. Verfahren zum Betreiben einer zumindest eine erste Einheit (BB1, BB2) umfassenden Vorrichtung, bei dem
• zwischen der ersten Einheit (BB1, BB2) und einer funktionell in Bezug auf die erste Einheit (BB1, BB2) gleichen zweiten Einheit (BB1, BB2) Daten über eine erste Schnittstelle (CPRI1) übertragen werden,
• zwischen der ersten Einheit (BB1, BB2) und einer funktionell in Bezug auf die erste Einheit (BB1, BB2) unterschiedlichen dritten Einheit (RE1, RE2) Daten über eine zweite Schnittstelle (CPRI2) übertragen werden,
**dadurch gekennzeichnet,**
• **dass** über die erste und die zweite Schnittstelle (CPRI1, CPRI2) jeweils eine Mehrzahl an verschiedenen Datentypen übertragen werden, und
• **dass** die erste und die zweite Schnittstelle (CPRI1, CPRI2) nach dem gleichen Standard spezifiziert sind, und
• **dass** es sich bei der ersten Einheit (BB1, BB2) und der zweiten Einheit (BB1, BB2) jeweils um eine Einrichtung zur Basisbandverarbeitung von Funksignalen handelt, und
• **dass** es sich bei der Vorrichtung um zumindest einen Bestandteil einer Basisstation eines Funkkommunikationssystems handelt.

## Claims

1. A device comprising at least one first unit (BB1, BB2),
• having a first interface (CPRI1) for transferring data between the first unit (BB1, BB2) and a second unit (BB1, BB2) which is functionally identical to the first unit (BB1, BB2),
• having a second interface (CPRI2) for transferring data between the first unit (BB1, BB2) and a third unit (RE1, RE2) which is functionally different from the first unit (BB1, BB2),
**characterised in that**
• the first and the second interfaces (CPRI1, CPRI2) are configured such that
- a plurality of different data types can be transferred in each case, and
- they are specified according to the same standard,
• the first unit (BB1, BB2) and the second unit (BB1, BB2) are in each case an entity for the baseband processing of radio signals, and
• the device represents at least one component of a base station of a radio communication system.

2. Device according to claim 1, in which
the standard provides for the transfer of the different data types using a time-division multiplexing method.

3. Device according to claim 1 or 2, in which the standard can provide for an optical and/or an electronic transfer method.

4. Device according to one of the claims 1 to 3, in which the standard provides for an Ethernet protocol and/or an HDLC protocol as a transfer protocol.

5. Device according to one of the claims 1 to 4, in which the first unit (BB1, BB2) has means for processing data, which was received via the first interface (CPRI1), of the second unit (BB1, BB2).

6. Device according to one of the claims 1 to 5, wherein the third unit (RE1, RE2) is a send and/or receive entity for sending and/or receiving radio signals.

7. Device according to one of the claims 1 to 6, in which the first and the second interfaces (CPRI1, CPRI2) represent an interface which is specified according to the CPRI standard.

8. A method for operating a device comprising at least one first unit (BB1, BB2), in which
• data is transferred between the first unit (BB1, BB2) and a second unit (BB1, BB2) which is functionally identical to the first unit (BB1, BB2) via a first interface (CPRI1),
• data is transferred between the first unit (BB1, BB2) and a third unit (RE1, RE2) which is functionally different from the first unit (BB1, BB2) via a second interface (CPRI2),
**characterised in that**
• a plurality of different data types are transferred via the first and the second interface (CPRI1, CPRI2) in each case, and
• the first and the second interface (CPRI1, CPRI2) are specified according to the same standard, and
• the first unit (BB1, BB2) and the second unit (BB1, BB2) are in each case an entity for the baseband processing of radio signals, and
• the device represents at least one component of a base station of a radio communication system.

## Revendications

1. Dispositif comprenant au moins une première unité (BB1, BB2),
• avec une première interface (CPRI1) pour la transmission de données entre la première unité (BB1, BB2) et une deuxième unité (BB1, BB2) identique sur un plan fonctionnel à la première unité (BB1, BB2),
• avec une deuxième interface (CPRI2) pour la transmission de données entre la première unité (BB1, BB2) et une troisième unité (RE1, RE2) différente sur un plan fonctionnel de la première unité (BB1, BB2),
**caractérisé**
• **en ce que** la première et la deuxième interfaces (CPRI1, CPRI2) sont exécutées de manière
- à ce qu'une pluralité de types de données différents puissent être transmis à chaque fois et
- à être spécifiées selon la même norme,
• **en ce qu'**il s'agit à chaque fois, concernant la première unité (BB1, BB2) et la deuxième unité (BB1, BB2), d'un dispositif de traitement de signaux radio dans la bande de base et
• **en ce qu'**il s'agit, concernant le dispositif, d'au moins une partie d'une station de base d'un système de radiocommunication.

2. Procédé selon la revendication 1, dans lequel la norme prévoit la transmission des différents types de données moyennant un procédé de multiplexage temporel.

3. Procédé selon la revendication 1 ou 2, dans lequel la norme prévoit un procédé de transmission optique et/ou électronique.

4. Procédé selon l'une des revendications 1 à 3, dans lequel la norme prévoit, en tant que protocole de transmission, un protocole Ethernet et/ou un protocole HDLC.

5. Procédé selon l'une des revendications 1 à 4, dans lequel la première unité (BB1, BB2) comprend un moyen pour le traitement de données de la deuxième unité (BB1, BB2) reçues par le biais de la première interface (CPRI1).

6. Procédé selon l'une des revendications 1 à 5, dans lequel il s'agit, concernant la troisième unité (RE1, RE2), d'un dispositif émetteur et/ou récepteur pour l'émission et/ou la réception de signaux radio.

7. Procédé selon l'une des revendications 1 à 6, dans lequel il s'agit, concernant la première et la deuxième interfaces (CPRI1, CPRI2), d'une interface spécifiée selon la norme CPRI.

8. Procédé pour faire fonctionner un dispositif comprenant au moins une première unité (BB1, BB2), dans lequel
• des données sont transmises par le biais d'une première interface (CPRI1) entre la première unité (BB1, BB2) et une deuxième unité (BB1, BB2) identique sur un plan fonctionnel à la première unité (BB1, BB2),
• des données sont transmises par le biais d'une deuxième interface (CPRI2) entre la première unité (BB1, BB2) et une troisième unité (RE1, RE2) différente sur un plan fonctionnel de la première unité (BB1, BB2),
**caractérisé**
• **en ce qu'**une pluralité de types de données différents sont transmis à chaque fois par le biais de la première et de la deuxième interfaces (CPRI1, CPRI2) et
• **en ce que** la première et la deuxième interfaces (CPRI1, CPRI2) sont spécifiées selon la même norme et
• **en ce qu'**il s'agit à chaque fois, concernant la première unité (BB1, BB2) et la deuxième unité (BB1, BB2), d'un dispositif de traitement de signaux radio dans la bande de base et
• **en ce qu'**il s'agit, concernant le dispositif, d'au moins une partie d'une station de base d'un système de radiocommunication.
